# FASCICULE DE BREVET EUROPEEN

(11) **EP 1 807 621 B1**
(45) Date de publication et mention de la délivrance du brevet: **21.05.2008**
(21) Numéro de dépôt: 05815209.1
(22) Date de dépôt: 28.10.2005
(51) Int. Cl.: F02K 9/60, F02K 9/50

(54) **DISPOSITIF POUR L'ALIMENTATION D'UN MOTEUR DE FUSEE EN COMBUSTIBLE ET EN COMBURANT**
GERÄT ZUR EINSPEISUNG VON BRENNSTOFF UND OXIDATIONSMITTEL IN EINEN RAKETENMOTOR
DEVICE FOR THE SUPPLY OF A ROCKET MOTOR WITH FUEL AND OXIDISER

(30) Priorité: 02.11.2004 FR 0411636
(43) Date de publication de la demande: 18.07.2007
(73) Titulaire: Astrium SAS, 75016 Paris (FR)
(72) Inventeur: CALABRO, Max, F-78670 Villennes (FR)
(74) Mandataire: Bonnetat, Christian
(86) Numéro de dépôt international: PCT/FR2005/002709
(87) Numéro de publication internationale: WO 2006/048543

(56) Documents cités:
- EP-A- 0 641 928
- US-A- 3 945 539
- US-A- 4 437 590
- US-A- 4 561 568
- US-A- 5 085 343
- US-A- 5 865 923
- US-B1- 6 231 008

## Description

La présente invention concerne un dispositif pour l'alimentation d'un moteur de fusée en combustible et en comburant.

On sait que, sur un lanceur spatial, on cherche à réduire le plus possible la masse et l'encombrement du système propulsif, et donc notamment du ou des réservoirs utilisés pour transporter les ergols et alimenter les moteurs du lanceur.

A cet effet, il est connu (voir par exemple US-4 561 568, US-5 085 343 et US-5 865 923) de prévoir un réservoir comportant deux compartiments adjacents, qui présentent une paroi commune et qui sont susceptibles de recevoir les fluides sous pression, ce qui permet de réduire l'encombrement du stockage des ergols (combustible et comburant) par rapport à une solution usuelle à deux réservoirs distincts.

Les ergols contenus dans les compartiments du réservoir sont mis sous pression à l'aide d'un système de mise sous pression, pour pouvoir être refoulés lors de leur utilisation hors desdits compartiments dans une chambre de combustion de moteur, dans laquelle a lieu la combustion desdits ergols.

Ledit système de mise sous pression comporte en général, pour chaque compartiment, un moyen de mise sous pression individuel comprenant, notamment, un récipient tel qu'une bouteille contenant un gaz inerte (généralement de l'hélium) qui est destiné à chasser les ergols hors desdits compartiments, dans ladite chambre de combustion. Un tel système de mise sous pression présente l'inconvénient d'être encombrant et surtout d'avoir une masse élevée, ce qui est bien entendu très pénalisant, notamment pour un lanceur spatial.

De plus, en raison de différences de pression existant dans les deux compartiments adjacents, qui peuvent être élevées, il convient de réaliser la paroi en un matériau rigide très résistant, qui est par conséquent généralement lourde, complexe et coûteuse.

La présente invention a pour objet de remédier à ces inconvénients.

A cette fin, selon l'invention, le dispositif pour l'alimentation d'un moteur de fusée en combustible et en comburant, comportant :
- un réservoir comprenant deux compartiments adjacents qui présentent une paroi commune et qui sont susceptibles de recevoir respectivement ledit combustible et ledit comburant sous forme liquide ; et
- des moyens susceptibles de mettre sous pression chacun desdits compartiments,
est remarquable en ce que :
- ladite paroi commune auxdits compartiments est déformable et comporte une amorce de retournement préformée ; et
- lesdits moyens de mise sous pression sont communs auxdits compartiments, du fait qu'un premier de ces compartiments est mis directement en pression par lesdits moyens et que le second compartiment est mis sous pression par la déformation progressive de ladite paroi commune résultant de la mise en pression dudit premier compartiment.

Ainsi, grâce aux caractéristiques de ladite paroi commune et desdits moyens communs de mise sous pression, on peut, par la mise en oeuvre de la présente invention, réduire la masse du dispositif d'alimentation en combustible et comburant.

De plus, on obtient une simplification des moyens de mise sous pression et une suppression de problèmes liés à des différences de pression, tels que des déviations du rapport de mélange, puisque les pressions dans les deux compartiments adjacents sont identiques.

Ladite paroi commune déformable peut, bien entendu, être réalisé de nombreuses façons différentes. Cependant, dans un mode de réalisation préféré de la présente invention, ladite paroi commune présente la forme au moins approximative d'une cloche dont la convexité se trouve du côté dudit premier compartiment et qui est réalisée en une matière souple et molle, de sorte que, lors de ladite déformation progressive, ladite paroi souple se retourne à la manière d'un doigt de gant. Une telle matière souple et molle peut être un aluminium de titre élevé, par exemple du type A6. Un tel aluminium présente de plus l'avantage de résister à la corrosion provoquée par les ergols. Eventuellement, ladite paroi souple peut être renforcée et/ou protégée contre la corrosion par au moins une couche de renfort et/ou de protection, par exemple en un tissu aramide, recouvrant au moins l'une des faces de ladite paroi souple. Une telle paroi souple peut également servir à isoler thermiquement lesdits compartiments l'un de l'autre.

On remarquera que ladite amorce de retournement préformée facilite le retournement de ladite paroi commune. De préférence, cette amorce de retournement comporte un creux qui est formé sensiblement au sommet de ladite paroi commune.

Dans un mode de réalisation de l'invention, lesdits moyens de mise sous pression comprennent au moins un récipient contenant un gaz sous pression, par exemple de l'hélium. Ce récipient peut être extérieur audit réservoir. Au contraire, afin de réduire au maximum les conduites de liaison, il est avantageusement disposé à l'intérieur dudit réservoir et, de préférence, à l'intérieur dudit premier compartiment.

Toutefois, dans un mode de réalisation préféré de la présente invention permettant de supprimer tout récipient contenant un gaz sous pression, lesdits moyens de mise sous pression comportent des premiers - moyens d'amorçage (tels que prépressurisation au sol du premier compartiment) permettant l'allumage dudit moteur et des seconds moyens d'entretien (tels que prélèvements gazeux et/ou thermiques sur ledit moteur ainsi allumé) permettant la mise sous pression continue dudit premier compartiment.

Les figures du dessin annexé feront bien comprendre comment l'invention peut être réalisée. Sur ces figures, des références identiques désignent des éléments semblables.

La figure 1 illustre schématiquement un dispositif conforme à l'invention.

Les figures 2 à 4 montrent schématiquement un dispositif conforme à l'invention à différents stades du refoulement des liquides qu'il contient.

Les figures 5, 6 et 7 illustrent schématiquement trois variantes de réalisation du dispositif conforme à l'invention.

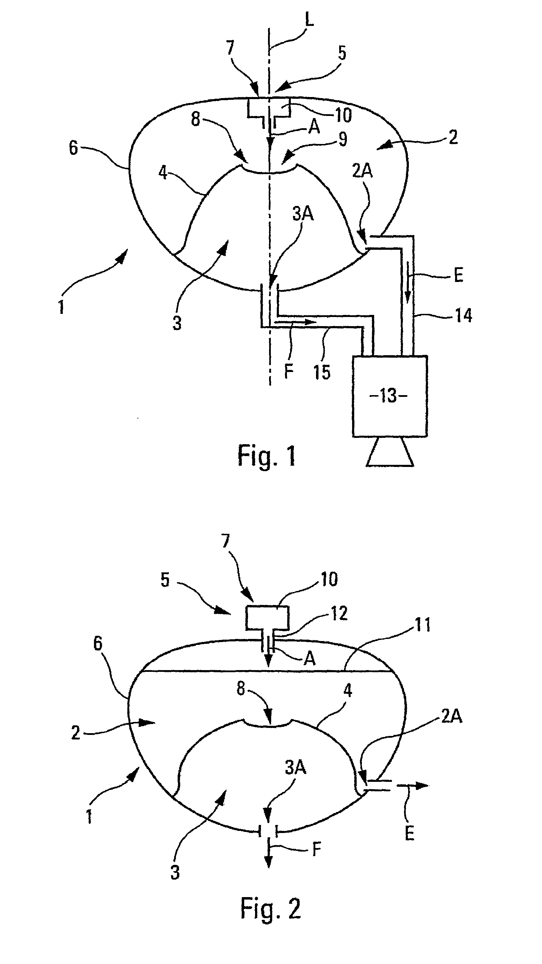

Le dispositif pour l'alimentation d'un moteur de fusée en combustible et en comburant, conforme à l'invention et représenté schématiquement sur la figure 1, comporte :
- un réservoir 1 comprenant deux compartiments adjacents 2 et 3 qui présentent une paroi commune 4 et qui sont susceptibles de recevoir respectivement le combustible et le comburant sous forme liquide ; et
- un système de mise sous pression 5 susceptible de mettre sous pression lesdits liquides dans lesdits compartiments 2 et 3.

Ledit réservoir 1 comporte par exemple une paroi extérieure 6 bobinée, en matériau composite, de forme sensiblement sphérique ou ovoïde, d'axe de symétrie L, qui est réalisée à l'aide de fils imprégnés bobinés autour d'un mandrin de bobinage. La paroi commune 4 est formée à l'intérieur de ladite paroi extérieure 6 de manière à délimiter les deux compartiments 2 et 3.

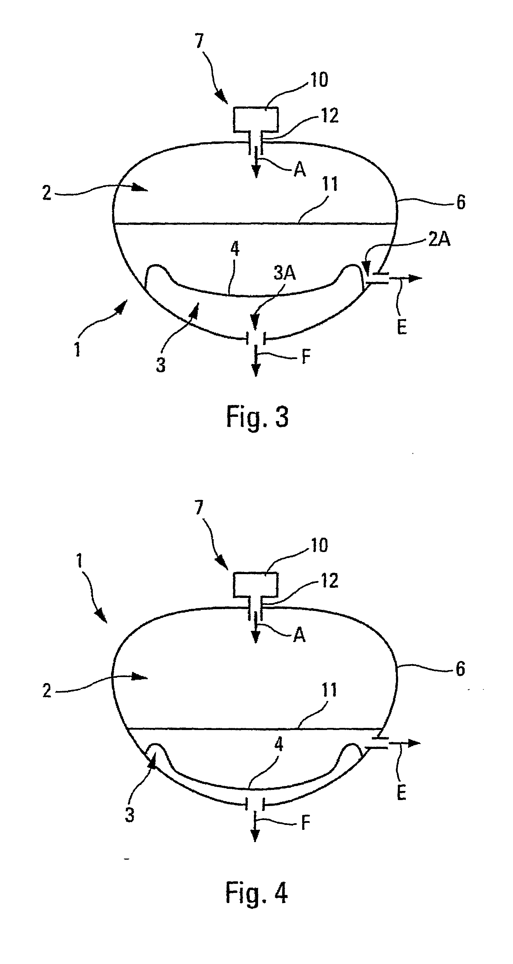

Ladite paroi commune 4 présente la forme au moins approximative d'une cloche et est réalisée en un matériau souple permettant un retournement de ladite paroi commune 4. De plus, ledit système 5 de mise sous pression comporte un seul et unique moyen 7 de mise sous pression qui est tel que :
- la mise sous pression du premier (2) desdits compartiments 2 et 3 est directement réalisée par ledit moyen 7 de mise sous pression ; et
- la mise sous pression du second compartiment 3 est réalisée par affaissement et retournement progressifs de ladite paroi commune 4, engendrés par la mise sous pression dudit premier compartiment 2, comme précisé ci-dessous en référence aux figures 2 à 4.

Grâce aux caractéristiques de ladite paroi commune 4 et dudit système 5 de mise sous pression, un seul et unique moyen 7 de mise sous pression est utilisé, ce qui réduit la masse dudit système 5 de mise sous pression et donc également la masse dudit réservoir 1.

De plus, avec un seul moyen 7 de mise sous pression, on obtient une simplification de la réalisation et une suppression de problèmes liés à des différences de pression, tels que des déviations du rapport de mélange, puisque les pressions dans les deux compartiments adjacents 2 et 3 sont sensiblement identiques, comme précisé ci-dessous.

Ladite paroi commune 4 est réalisée en aluminium mou et ductile, de type A6 par exemple, qui se prête bien à une déformation par (affaissement et) retournement. Elle peut être recouverte sur au moins l'une de ses faces d'une couche mince (non représentée). Une telle couche, par exemple en tissu aramide ou analogue, de type PBO ou M5, qui est par exemple collée sur ladite paroi commune 4, renforce ladite paroi commune 4, ce qui permet d'éviter tout risque de déchirement de cette dernière, notamment lors d'un retournement. De plus, une telle couche mince peut protéger la paroi commune 4 contre l'action corrosive des liquides contenus dans les compartiments 2 et 3 et/ou servir à l'isolation thermique entre les ergols contenus dans ces derniers.

En outre, pour faciliter son retournement, ladite paroi commune 4 comporte une amorce de retournement 8 préformée.

Dans l'exemple représenté, cette amorce de retournement 8 est constituée d'un creux (ou cavité), qui est formé sensiblement au sommet 9 de ladite paroi commune 4. L'amorce de retournement 8 représente donc une partie concave audit sommet 9, en regard du compartiment 2, comme représenté sur les figures 1 et 2.

Sur les figures 1 à 4, ledit moyen 7 de mise sous pression comprend notamment un récipient 10 tel qu'une bouteille, contenant un gaz inerte de compression, par exemple de l'hélium, qui est destiné à engendrer la mise sous pression dudit compartiment 2, dans lequel il agit directement, comme illustré par une flèche A.

L'utilisation d'un seul moyen 7 de mise sous pression permet en outre de choisir le fluide de compression qui est le plus performant, par exemple de l'hydrogène lorsque le compartiment 2 comporte de l'hydrogène ou du méthane liquide, à titre de combustible.

Les liquides qui sont refoulés hors des compartiments 2 et 3, comme illustré par les flèches E et F, sont amenés dans la chambre de combustion d'un moteur de fusée 13, respectivement reliée auxdits compartiments 2 et 3 par des conduits 14 et 15.

Comme on peut le voir sur les figures 2 à 4 illustrant l'état du réservoir 1 à des instants successifs, le gaz de compression est délivré par le récipient 10 dans le compartiment 2 (flèche A) pour agir sur le liquide contenu dans ce compartiment 2 de manière à le refouler à travers une ouverture 2A hors de ce dernier de sorte que le niveau 11 dudit fluide baisse alors progressivement. Simultanément, la mise sous pression du compartiment 2 engendre une action sur la paroi commune souple 4 qui s'affaisse, puis se retourne, progressivement, en résorbant le volume mort et génère ainsi une mise sous pression du compartiment 3, ce qui provoque alors le refoulement progressif du liquide contenu dans ce compartiment 3 à travers une ouverture 3A, hors dudit compartiment 3. On obtient ainsi grâce à l'invention une pression sensiblement de même valeur dans les deux compartiments 2 et 3, aussi bien initialement qu'aux différents stades du refoulement.

Bien entendu, le refoulement hors desdits compartiments 2 et 3 n'est réalisé qu'à partir du moment où on libère les ouvertures 2A et 3A qui sont initialement fermées.

Comme représenté sur la figure 1, ledit récipient 10 de mise sous pression peut être logé dans ledit compartiment 2, ce qui permet de réduire au minimum les moyens (conduits, ...) destinés à amener ledit gaz de compression à partir dudit récipient 10 jusqu'à l'intérieur du compartiment 2 pour engendrer la mise sous pression de ce dernier.

Toutefois, il est également possible que :
- ledit récipient 10 soit logé dans ledit compartiment 3 ; ou
- ledit récipient soit logé à l'extérieur desdits compartiments 2 et 3, comme représenté sur les figures 2 à 4.

Bien entendu, dans ces deux derniers cas, il est nécessaire de prévoir dans le réservoir 1 des conduits 12 usuels, destinés à amener le gaz de compression dans le compartiment 2 où il est libéré.

Ledit compartiment 2 contient de préférence le combustible, tel que de l'hydrogène ou du méthane liquide et ledit compartiment 3 contient un comburant, tel que de l'oxygène liquide.

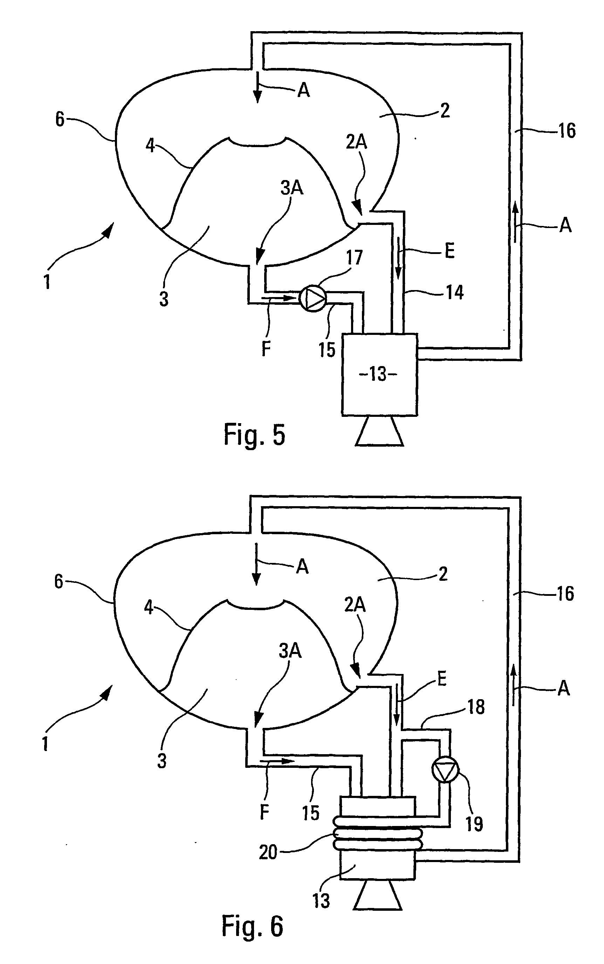

Dans les variantes de réalisation préférées des figures 5 à 7, le système de mise en pression 5 ne comporte plus de récipient 10.

Dans le dispositif de la figure 5, à la place du récipient 10, on a prévu une canalisation 16 reliant le moteur 13 au compartiment 2 du réservoir 1. Si, dans ce compartiment 2 se trouve le combustible du moteur 13 (hydrogène ou méthane liquide, par exemple), la canalisation 16 est chargée de prélever un gaz chaud de même nature (hydrogène gazeux) sur le moteur 13 pour mettre sous pression le compartiment 2 (flèches A). Par ailleurs, au remplissage, au sol, du compartiment 2 avec du combustible, on a prépressurisé ce dernier par exemple à l'aide d'hélium sous pression.

Ainsi, dans le dispositif de la figure 5, lorsqu'on ouvre les obturateurs des ouvertures 2A et 3A, du combustible et du comburant sont introduits dans le moteur 13, grâce à la ladite prépressurisation du combustible qui chasse directement le combustible (flèche E) et indirectement le comburant (par déformation de la paroi commune 4 - flèche F). Eventuellement, une électropompe 17 facilite l'écoulement du comburant du compartiment 3. Grâce à cet apport de combustible et de comburant (dû essentiellement à ladite prépressurisation initiale), le moteur 13 est allumé, de sorte qu'il engendre des gaz chauds et, notamment, de l'hydrogène gazeux (plus léger que l'hélium) qui est introduit dans le compartiment 2 par la canalisation 16. Cet hydrogène gazeux prend le relais de la prépressurisation initiale pour chasser le combustible du compartiment 2 et le comburant du compartiment 3, comme cela a été expliqué ci-dessus pour le dispositif de mise en pression 5.

Dans la variante de réalisation de la figure 6 dans laquelle le compartiment 2 a également subi une prépressurisation au sol- on prélève une partie du combustible liquide adressé au moteur 13 par une canalisation de dérivation 18, éventuellement équipée d'une électropompe 19, et on la réchauffe dans un échangeur de chaleur 20 disposé au voisinage du moteur 13 pour obtenir un flux d'hydrogène gazeux (flèche A) qui est ramené au compartiment 2 par une canalisation 21 (semblable à la canalisation 1 6). Le fonctionnement de la variante de réalisation de la figure 6 est très proche de celui de la variante de la figure 5, la seule différence étant que le flux gazeux chaud de mise sous pression ramené dans le compartiment 2 par la canalisation 21 ne provient pas du moteur, mais est chauffé et vaporisé par celui-ci.

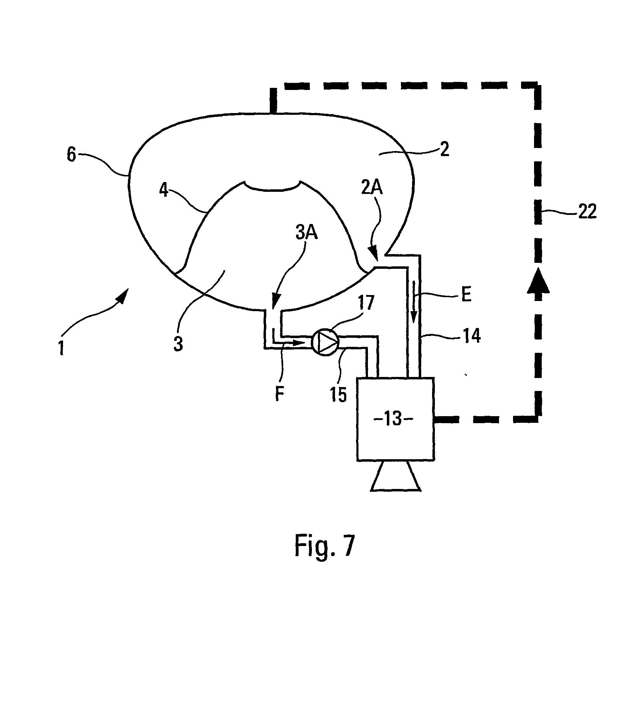

Enfin, dans la variante de la figure 7, la canalisation 16 de la figure 5 est remplacée par un trajet conducteur de chaleur 22, par exemple réalisé à base de caloducs, prélevant de la chaleur sur le moteur 13 (amorcé comme décrit précédemment grâce à la prépressurisation du liquide du compartiment 2) et l'amenant dans ce dernier. Bien entendu, dans ce cas, le liquide contenu dans ledit compartiment 2 doit être vaporisable sous l'action de la chaleur ramenée par le trajet 22.

## Revendications

1. Dispositif pour l'alimentation d'un moteur de fusée (13) en combustible et en comburant, comportant :
- un réservoir (1) comprenant deux compartiments adjacents (2, 3) qui présentent une paroi commune (4) et qui sont susceptibles de recevoir respectivement ledit combustible et ledit comburant sous forme liquide ; et
- des moyens (16; 20, 21 ; 22) susceptibles de mettre sous pression chacun desdits compartiments (2, 3),
**caractérisé en ce que** :
- ladite paroi (4) commune auxdits compartiments (2, 3) est déformable et comporte une amorce de retournement (8) préformée ; et
- lesdits moyens de mise sous pression (16 ; 20, 21 ; 22) sont communs auxdits compartiments, du fait qu'un premier (2) de ces compartiments est mis directement en pression par lesdits moyens et que le second compartiment (3) est mis sous pression par la déformation progressive de ladite paroi commune (4) résultant de la mise en pression dudit premier compartiment (2).

2. Dispositif selon la revendication 1,
**caractérisé en ce que** ladite paroi commune (4) présente la forme au moins approximative d'une cloche dont la convexité se trouve du côté dudit premier compartiment (2) et qui est réalisée en une matière souple et molle, de sorte que, lors de ladite déformation progressive, ladite paroi souple (4) se retourne à la manière d'un doigt de gant.

3. Dispositif selon la revendication 2,
**caractérisé en ce que** ladite matière souple et molle est un aluminium de titre élevé.

4. Dispositif selon l'une des revendications 1 à 3,
**caractérisé en ce que** ladite amorce de retournement (8) comporte un creux qui est formé sensiblement au sommet (9) de ladite paroi commune (4).

5. Dispositif selon l'une des revendications 1 à 4,
**caractérisé en ce que** ladite paroi commune (4) est recouverte sur au moins l'une de ses faces d'une couche souple.

6. Dispositif selon l'une des revendications 1 à 5,
**caractérisé en ce que** lesdits moyens de mise sous pression (5) comprennent au moins un récipient (10) contenant un gaz sous pression.

7. Dispositif selon la revendication 6,
**caractérisé en ce que** ledit récipient (10) est extérieur audit réservoir (1).

8. Dispositif selon la revendication 6,
**caractérisé en ce que** ledit récipient (10) est logé dans ledit premier compartiment (2).

9. Dispositif selon l'une des revendications 1 à 5,
**caractérisé en ce que** lesdits moyens de mise sous pression comportent des premiers moyens d'amorçage permettant l'allumage dudit moteur (13) et des seconds moyens d'entretien (16 ; 20, 21 ; 22) permettant la mise sous pression continue dudit premier compartiment.

10. Dispositif selon la revendication 9,
**caractérisé en ce que** lesdits premiers moyens d'amorçage consistent en une prépressurisation dudit premier compartiment (2).

11. Dispositif selon l'une des revendications 9 ou 10,
**caractérisé en ce que** lesdits seconds moyens d'entretien consistent en un prélèvement de gaz chaud (16) sur ledit moteur (13).

12. Dispositif selon la revendication 11,
**caractérisé en ce que** ledit gaz chaud prélevé est de même nature que le liquide contenu dans ledit premier compartiment (2).

13. Dispositif selon l'une des revendications 9 ou 10,
**caractérisé en ce que** lesdits seconds moyens d'entretien (20, 21) consistent en la vaporisation, par ledit moteur (13), d'un flux du liquide provenant dudit premier compartiment (2).

14. Dispositif selon l'une des revendications 9 ou 10,
**caractérisé en ce que** lesdits seconds moyens d'entretien consistent en un prélèvement de chaleur (22) sur ledit moteur (13).

15. Dispositif selon l'une des revendications 1 à 14,
**caractérisé en ce que** ledit premier compartiment (2) contient le combustible et ledit second compartiment (3) contient le comburant.

## Claims

1. Arrangement for the supply of a rocket motor (13) with fuel and oxidiser comprising:
- a tank (1) comprising two adjacent compartments (2, 3) which have a common wall (4) and which are respectively able to receive, in liquid form, the said fuel and the said oxidiser and
- means (16; 20, 21; 22) able to pressurise each of the said compartments (2, 3),
**characterised in that**
- the said wall (4) common to the said compartments (2, 3) is deformable and comprises a preformed initial fold-in (8) and
- the said pressurising means (16; 20, 21; 22) are common to the said compartments by reason of the fact that a first one (2) of the said compartments is pressurised directly by the said means and the second compartment (3) is pressurised by the progressive deformation of the said common wall (4) which results from the pressurisation of the said first compartment (2).

2. Arrangement according to claim 1, **characterised in that** the said common wall (4) is at least approximately in the shape of a bell whose convexity is situated on the side on which the said first compartment (2) is situated and which is made of a soft and flexible material such that, at the time of the said progressive deformation, the said flexible wall (4) folds in after the fashion in which a finger of a glove folds out.

3. Arrangement according to claim 2, **characterised in that** the said soft and flexible material is a high-grade aluminium.

4. Arrangement according to one of claims 1 to 3, **characterised in that** the said initial fold-in (8) comprises a hollow which is formed substantially at the crown (9) of the said common wall (4).

5. Arrangement according to one of claims 1 to 4, **characterised in that** the said common wall (4) is covered on at least one of its faces with a flexible layer.

6. Arrangement according to one of claims 1 to 5, **characterised in that** the said pressurising means (5) comprise at least one container (10) holding a pressurised gas.

7. Arrangement according to claim 6, **characterised in that** the said container (10) is external to the said tank (1).

8. Arrangement according to claim 6, **characterised in that** the said container (10) is housed in the said first compartment (2).

9. Arrangement according to one of claims 1 to 5, **characterised in that** the said pressurising means comprise first, starting means enabling the said motor (13) to be ignited and second, sustaining means (16; 20, 21; 22) enabling the said first compartment to be continuously pressurised.

10. Arrangement according to claim 9, **characterised in that** the said first, starting means comprise pre-pressurisation of the said first compartment (2).

11. Arrangement according to either of claims 9 and 10, **characterised in that** the said second, sustaining means comprise a take-off of hot gas (16) from the said motor (13).

12. Arrangement according to claim 11, **characterised in that** the said hot gas which is taken off is of the same kind as the liquid contained in the said first compartment (2).

13. Arrangement according to either of claims 9 and 10, **characterised in that** the said second, sustaining means (20, 21) comprise the vaporisation by the said motor (13) of a flow of the liquid coming from the said first compartment (2).

14. Arrangement according to either of claims 9 and 10, **characterised in that** the said second, sustaining means comprise a take-off of heat (22) from the said motor (13).

15. Arrangement according to one of claims 1 to 14, **characterised in that** the said first compartment (2) contains the fuel and the said second compartment (3) contains the oxidiser.

## Patentansprüche

1. Vorrichtung zur Versorgung eines Raketenmotors (13) mit Brennstoff und Oxidationsmittel, umfassend:
- einen Tank (1) mit zwei benachbarten Kammern (2, 3), die eine gemeinsame Wand (4) aufweisen und die geeignet sind, den Brennstoff bzw, das Oxidationsmittel in flüssiger Form aufzunehmen, und
- Mittel (16; 20, 21; 22), die geeignet sind, jede der Kammern (2, 3) mit Druck zu beaufschlagen,
**dadurch gekennzeichnet, dass**:
- die gemeinsame Wand (4) der Kammer (2, 3) verformbar ist und einen vorgeformten Ausgangspunkt für eine Umstülpung (8) umfasst; und
- die Mittel zur Druckbeaufschlagung (16; 20, 21; 22) den Kammern gemeinsam sind, da eine erste (2) dieser Kammern direkt durch die Mittel mit Druck beaufschlagt wird und da die zweite Kammer (3) durch die allmähliche Verformung der gemeinsamen Wand (4) mit Druck beaufschlagt wird, die aus der Druckbeaufschlagung der ersten Kammer (2) resultiert.

2. Vorrichtung nach Anspruch 1,
**dadurch gekennzeichnet, dass** die gemeinsame Wand (4) zumindest annähernd die Form einer Glocke aufweist, deren Konvexität sich an der Seite der ersten Kammer (2) befindet und die aus einem nachgiebigen und weichen Material gebildet ist, so dass sich die nachgiebige Wand (4) bei der allmählichen Verformung in der Art eines Handschuhfingers umstülpt.

3. Vorrichtung nach Anspruch 2,
**dadurch gekennzeichnet, dass** das nachgiebige und weiche Material ein Aluminium mit hohem Reinheitsgrad ist.

4. Vorrichtung nach einem der Ansprüche 1 bis 3,
**dadurch gekennzeichnet, dass** der Ausgangspunkt für die Umstülpung (8) eine Vertiefung umfasst, die im Wesentlichen am Scheitelpunkt (9) der gemeinsamen Wand (4) gebildet ist.

5. Vorrichtung nach einem der Ansprüche 1 bis 4,
**dadurch gekennzeichnet, dass** die gemeinsame Wand (4) an mindestens einer ihrer Seiten mit einer nachgiebigen Schicht bedeckt ist.

6. Vorrichtung nach einem der Ansprüche 1 bis 5,
**dadurch gekennzeichnet, dass** die Mittel zur Druckbeaufschlagung (5) mindestens einen Behälter (10) umfassen, der ein Druckgas enthält.

7. Vorrichtung nach Anspruch 6,
**dadurch gekennzeichnet, dass** sich der Behälter (10) außerhalb des Tanks (1) befindet.

8. Vorrichtung nach Anspruch 6,
**dadurch gekennzeichnet, dass** der Behälter (10) in der ersten Kammer (2) angeordnet ist.

9. Vorrichtung nach einem der Ansprüche 1 bis 5,
**dadurch gekennzeichnet, dass** die Mittel zur Druckbeaufschlagung umfassen: erste Aktivierungsmittel, welche die Zündung des Motors (13) ermöglichen, und zweite Versorgungsmittel (16; 20, 21; 22), welche die kontinuierliche Druckbeaufschlagung der ersten Kammer ermöglichen.

10. Vorrichtung nach Anspruch 9,
**dadurch gekennzeichnet, dass** die ersten Aktivierungsmittel auf einer Vorab-Druckbeaufschlagung der ersten Kammer (2) beruhen.

11. Vorrichtung nach einem der Ansprüche 9 oder 10,
**dadurch gekennzeichnet, dass** die zweiten Versorgungsmittel auf einer Entnahme von heißem Gas (16) aus dem Motor (13) beruhen.

12. Vorrichtung nach Anspruch 11,
**dadurch gekennzeichnet, dass** das entnommene heiße Gas von gleicher Natur wie die in der ersten Kammer (2) enthaltene Flüssigkeit ist.

13. Vorrichtung nach einem der Ansprüche 9 oder 10,
**dadurch gekennzeichnet, dass** die zweiten Versorgungsmittel (20, 21) in der Verdampfung eines von der ersten Kammer (2) stammenden Flüssigkeitsstroms durch den Motor (13) bestehen.

14. Vorrichtung nach einem der Ansprüche 9 oder 10,
**dadurch gekennzeichnet, dass** die zweiten Versorgungsmittel auf einer Entnahme von Wärme (22) aus dem Motor (13) beruhen.

15. Vorrichtung nach einem der Ansprüche 1 bis 14,
**dadurch gekennzeichnet, dass** die erste Kammer (2) den Brennstoff und die zweite Kammer (3) das Oxidationsmittel enthält.
